# EUROPEAN PATENT SPECIFICATION

(11) **EP 1 801 468 B1**
(45) Date of publication and mention of the grant of the patent: **04.09.2013**
(21) Application number: 05778613.9
(22) Date of filing: 08.09.2005
(51) Int. Cl.: F16J 12/00, F16J 13/12, F16J 13/02

(54) **PRESSURE-RESISTANT CONTAINER**
DRUCKFESTER BEHÄLTER
RECIPIENT RESISTANT A LA PRESSION

(30) Priority: 16.09.2004 JP 2004269450
(43) Date of publication of application: 27.06.2007
(73) Proprietor: MITSUBISHI MATERIALS CORPORATION, Chiyoda-ku, Tokyo 100-004 (JP)
(72) Inventor: KAWASAKI, Takayuki, Mitsubishi Materials Corp., Saitama-shi, Saitama 3300835 (JP); SHINOHARA, Katsunori, Mitsubishi Materials Corp., Saitama-shi, Saitama 3300835 (JP); ATSUMI, Haruto, Plant Support Service Co., Ltd., Monou-gun, Miyagi 9871222 (JP)
(74) Representative: Charlton, Peter John
(86) International application number: PCT/JP2005/016490
(87) International publication number: WO 2006/030682

(56) References cited:
- DE-B- 1 165 624
- JP-A- 01 124 592
- JP-A- 06 193 739
- JP-A- 10 304 983
- JP-A- 53 093 415
- JP-A- 58 052 082
- JP-A- 2003 139 244
- JP-Y1- 47 029 611
- US-A- 4 704 539

## Description

### Technical Field

The present invention relates to a pressure-resistant container configured so that an opening of apressure-resistant container body that can contain a high-temperature and high-pressure fluid is opened and closed with a lid.

### Background Art

A known pressure-resistant container of this type includes a pressure-resistant container body that can contain, for example, a supercritical fluid or a subcritical fluid of carbon dioxide, and a lid that is moved toward and away from an opening of the container body to open and close the opening (for example, Patent Document 1).

Carbon dioxide has a critical temperature of about 31.1°C and critical pressure of about 7.4 MPa. These critical points are lower than those of other substances, which means that carbon dioxide is advantageously easy to handle. In particular, the critical temperature is close to room temperature, which eliminates the danger that a subject to be cleaned such as a silicon wafer that is cleaned by a supercritical fluid is damaged by heat, and also eliminates the need for considering heat resistance of a pressure-resistant container.

Thus, an adopted container body has a structure in which a lower end of the container body is securely supported from below with little consideration of deformation by thermal expansion (that is, thermal deformation).

On the other hand, the lid is configured to precisely fit in the opening of the container body. For example, the lid is configured to be reciprocated on a predetermined rail and thus moved toward and away from the opening of the container body to open and close the opening for automatic cleaning with a supercritical fluid.

In the pressure-resistant container, however, a problem occurs that the lid cannot be smoothly inserted into the opening of the container body in an operation using a supercritical fluid of heated carbon dioxide.

Thus, the inventor have diligently studied in order to solve this problem, and found the following: for example, the critical temperature of carbon dioxide is low, about 30°C, but if carbon dioxide is heated to about 250°C for use, the temperature before the operation of 25°C (room temperature) increases up to 200°C to 250°C during the operation. This temperature change causes larger thermal deformation than expected, and in the structure in which the lower end of the container body is securely supported from below, an axial portion of the container body is significantly displaced in a vertical direction by the thermal deformation, which prevents the lid from being smoothly inserted into the opening of the container body during the operation.
[Patent Document 1] Japanese Patent Laid-Open No. 2003-139244

### Disclosure of the Invention

The present invention is achieved based on the above described findings, and has an object to provide a pressure-resistant container in which an opening of a container body can be smoothly opened and closed with a lid without being affected by temperature changes.

In order to achieve the object, the present invention provides a pressure-resistant container comprising: a pressure-resistant container body that has an opening at one end in an axial direction and can contain a high-temperature and high-pressure fluid; and a lid that is moved toward and away from said opening of the container body to open and close said opening, characterized in that said one end of said container body is supported on both sides relative to said axial direction with said axial direction being oriented in a lateral direction, and each side of said one end is supported by support means including a displacement absorbing member that absorbs displacement in a lateral direction, and said lid includes an inner lid that fits in said opening of said container body, an outer lid that is provided adjacent to the inner lid in the axial direction and rotatably relative to said inner lid, and is rotated by a predetermined angle and locked in a clamp portion provided in one end of said container body to hold said inner lid fitting in the opening of said container body, and urging means for applying a force to separate said inner lid and said outer lid in the axial direction.

In the pressure-resistant container according to the present invention, an adhesion preventing plate that prevents galling of each surface is provided on at least one of opposite surfaces of the inner lid and the outer lid.

Further, the inner lid is provided with a packing having a U-shaped section that seals the inner lid and the opening of the container body with an open side of the U shape being directed to the inside of the container body, and provided with a packing holding member that holds an inner wall on the radial inside of the U shape of the packing on the inner lid side.

In addition, one end of the container body is provided, in a position closer to the outside of the container body than the packing in the opening, with second packing having a U-shaped section that seals the opening and the inner lid with an open side of the U shape being directed to the outside of the container body, and provided with a second packing holding member that holds an outer wall on the radial outside of the U shape of the second packing on the opening side.

In the pressure-resistant container according to the present invention, the other end of the container body in the axial direction is supported by second support means including a second displacement absorbing member that absorbs displacement of the other end in the axial direction.

In the pressure-resistant container according to the present invention, one end of the container body is guided by lateral constraining means for laterally constraining the center in the lateral direction of one end.

According to the pressure-resistant container of the present invention configured as described above, one end of the container body is supported on the both sides relative to the axial direction with the axial direction being oriented in the lateral direction, and each side of said one end is supported by the support means including the displacement absorbing member that absorbs the displacement of one end in the lateral direction. Thus, a substance to be a high-temperature and high-pressure fluid changes from a state of the high-temperature and high-pressure fluid to a normal pressure state, and therefore, even if the temperature of the container body significantly changes, thermal deformation of the container body caused by the temperature change can be absorbed by the displacement absorbing member at each of the lateral portions of one end.

Thus, the lateral portions of one end of the container body are equally displaced in the lateral direction by the temperature change. Portions of one end of the container body other than in the lateral direction are also equally displaced in a vertical direction or an obliquely vertical direction.

Therefore, even if the temperature of the container body significantly changes, the amount of displacement of the opening of the container body in the lateral direction or the vertical direction can be minimized. Thus, the opening of the container body can be smoothly opened and closed with the lid without being affected by the temperature change.

Further, according to the invention, the lid includes the inner lid that fits in the opening of the container body, and the outer lid that is provided adjacent to the inner lid in the axial direction and rotatably relative to the inner lid, and is rotated by the predetermined angle and locked in the clamp portion provided in one end of the container body to hold the inner lid fitting in the opening of the container body, and thus rotating the outer lid only allows the inner lid to be held fitting in the opening. Specifically, rotation of the inner lid relative to the opening can be prevented during the holding.

Pressure in the container body acts on the outer lid via the inner lid, and thus the inner lid and the outer lid are pressed to be in tight contact with each other. The tight contact state is still maintained after the pressure in the container body is reduced to, for example, normal pressure, and rotating the outer lid so as to unlock the container body from the clamp portion causes rotation of the inner lid. However, the urging means is provided for applying the force to separate the inner lid and the outer lid in the axial direction , thus reducing the pressure in the container body to, for example, normal pressure allows the inner lid and the outer lid to be separated, and the outer lid only is rotated to unlock the container body from the clamp portion, thereby allowing the inner lid to be drawn out of the opening.

Thus, rotation of the inner lid fitting in the opening can be prevented, thereby reducing wear of the packing placed, for example, between the inner lid and the opening.

Further, according to the invention, the adhesion preventing plate that prevents galling of each surface is provided on at least one of the opposite surfaces of the inner lid and the outer lid, thereby preventing an increase in adhesion caused by the galling of the inner lid and the outer lid. Thus, the inner lid and the outer lid can be reliably separated by the urging means.

According to the invention, the inner wall on the radial inside of the U shape of the packing having the U-shaped section provided in the inner lid is held on the inner lid side by the packing holding member, thereby preventing deformation of the packing in the direction away from the inner lid while maintaining sealing performance of the packing between the inner lid and the opening. Specifically, the packing is made of synthetic resin such as fluororesin having a larger coefficient of linear expansion than metal such as stainless steel that forms the inner lid, and thus deformation occurs such that the packing protrudes from the inner lid or hangs from the inner lid with increase in temperature. Such deformation can be restrained by the packing holding member. This prevents the inner lid from being unable to fit in the opening of the container body because of the deformation of the packing by the temperature change.

The open side of the U shape of the packing is directed to the inside of the container body, thereby reliably preventing the high-temperature and high-pressure fluid in the container body from leaking out through a gap between the inner lid and the opening.

According to another aspect of the invention, one end of the container body is provided, in a position closer to the outside of the container body than the packing in the opening, with the second packing having the U-shaped section, and the outer wall on the radial outside of the U shape of the second packing is held on the opening side by the second packing holding member, thereby preventing deformation of the second packing in the direction away from the opening while maintaining sealing performance of the second packing between the opening and the inner lid. Specifically, the second packing is made of resin such as fluororesin having a larger coefficient of linear expansion than metal such as stainless steel that forms the container body, and thus deformation occurs such that the packing shrinks inward from the opening with reduction in temperature. Such deformation can be restrained by the second packing holding member. This prevents the inner lid from being unable to fit in the opening of the container body because of the deformation of the second packing by the temperature change.

The open side of the U shape of the second packing is directed to the outside of the container body, thereby reliably preventing outside air from flowing into the container body through a gap between the opening and the inner lid even if a vacuum is introduced into the container body.

Further, according to the invention, the other end of the container body in the axial direction is supported by the second support means including the second displacement absorbing member that absorbs the displacement of the other end in the axial direction, thereby preventing the opening from being displaced in the axial direction by thermal deformation of the container body in the axial direction.

According to the invention, one end of the container body is guided by the lateral constraining means for laterally constraining the center in the lateral direction of one end, thereby reliably preventing the opening of the container body from being displaced in the lateral direction by thermal deformation.

### Brief Description of the Drawings

[Figure 1]

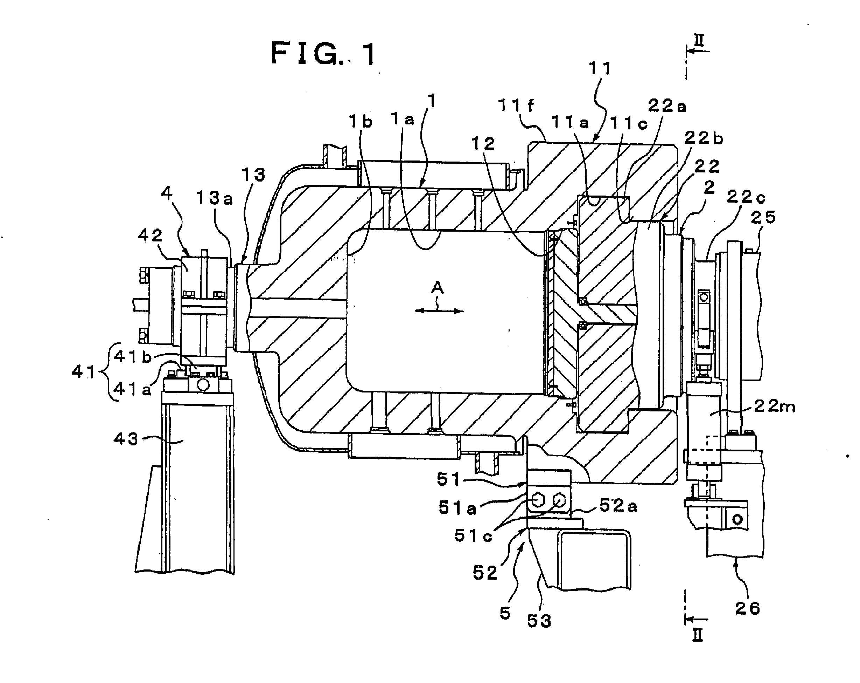

   Figure 1 is a sectional view of a pressure-resistant container as an embodiment of the invention.
[Figure 2]

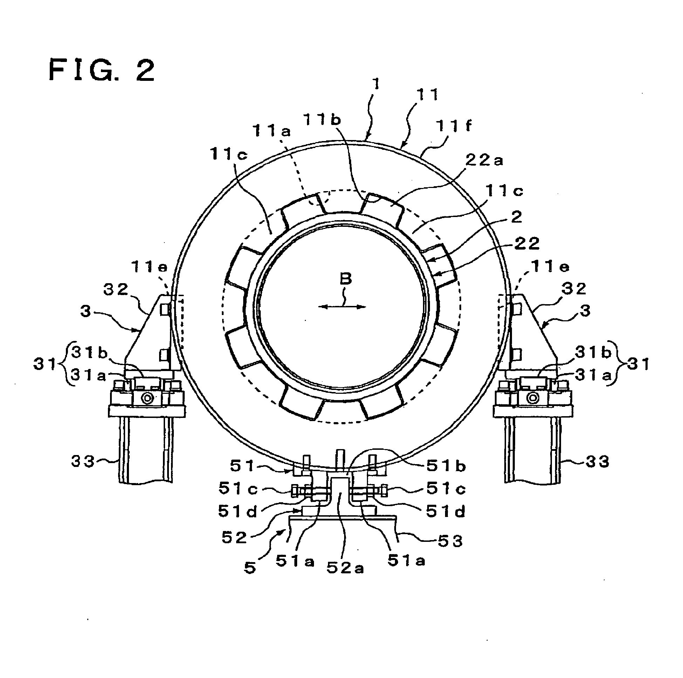

   Figure 2 is a sectional view of the pressure-resistant container taken along the line II-II in Figure 1.
[Figure 3]

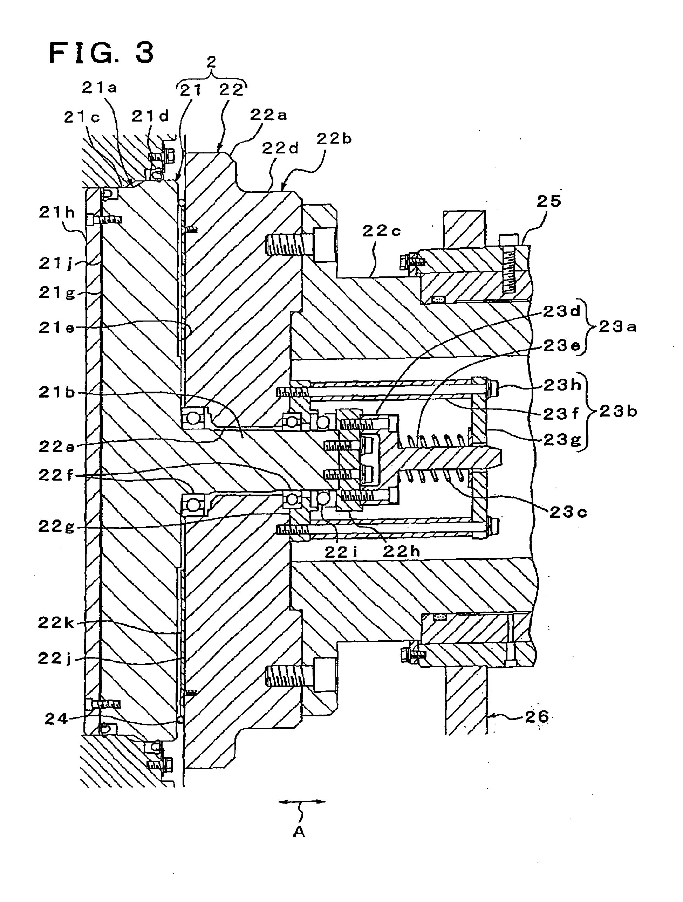

   Figure 3 is a sectional view of essential portions of a lid, and first and second urging means of the pressure-resistant container.
[Figure 4]

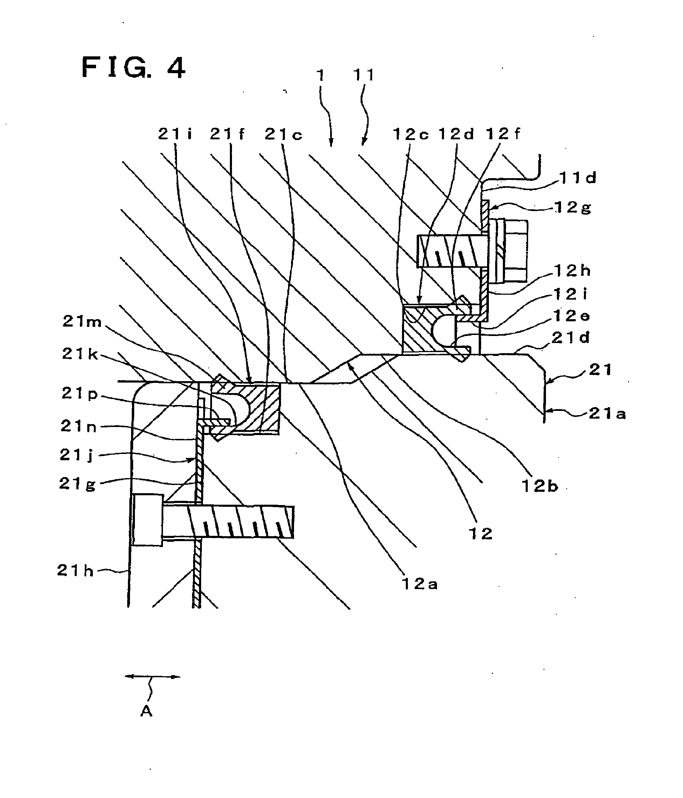

   Figure 4 is a sectional view of essential portions of a fitting portion between an opening and an inner lid of the pressure-resistant container.
[Figure 5]

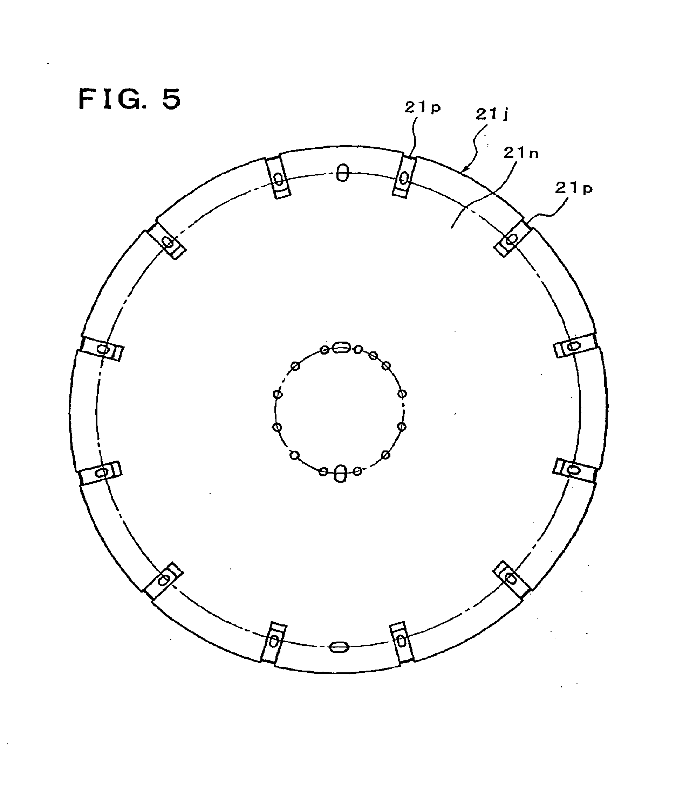

   Figure 5 is a front view of a first packing holding member of the pressure-resistant container.
[Figure 6]

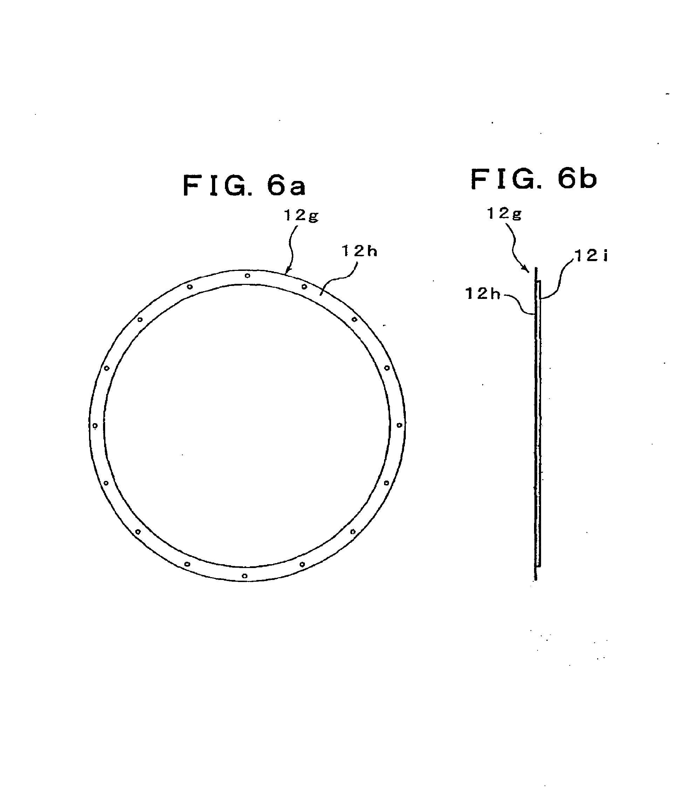

   Figures 6a and 6b are views of a second packing holding member of the pressure-resistant container, and Figure 6a is a front view and Figure 6b is a sectional view. Description of Reference Numerals and Symbols

- 1: container body
- 2: lid
- 3: first support means (support means)
- 4: second support means
- 5: lateral constraining means
- 11: one end
- 11c: clamp portion
- 12: opening
- 12d: second packing
- 12f: outer wall
- 12g: second packing holding member
- 13: the other end
- 21: inner lid
- 21i: first packing (packing)
- 21j: first packing holding member (packing holding member)
- 21k: inner wall
- 22: outer lid
- 22a: pawl
- 22k: adhesion preventing plate
- 23: first urging means (urging means)
- 24: second urging means (urging means)
- 31: first linear guide (displacement absorbing member)
- 41: second linear guide (second displacement absorbing member)
- A: axial direction
- B: lateral direction

### Best Mode for Carrying Out the Invention

An embodiment as a best mode for carrying out the invention will be described with reference to Figures 1 to 6.

As shown in Figures 1 to 3, a pressure-resistant container according to the embodiment includes a pressure-resistant container body 1 that has an opening 12 at one end 11 in an axial direction A and can contain a high-temperature and high-pressure fluid, and a lid 2 that is moved toward and away from the opening 12 of the container body 1 in the axial direction A to open and close the opening 12. One end 11 of the container body 1 is supported at lateral ends (portions) relative to the axial direction A with the axial direction A being oriented in a horizontal (lateral) direction. Specifically, as shown in Figure 2, each of the lateral portions of one end 11 is supported by first support means (support means) 3 including a first linear guide (a displacement absorbing member) 31 that absorbs displacement in a lateral direction B.

The lateral direction B means a horizontal direction orthogonal to the axial direction A. Reference character A refers to the axial direction of the container body 1 and the lid 2 only, and does not refer to the axial direction of other members.

As shown in Figure 1, the container body 1 is made from stainless steel and formed into a substantially cylindrical shape, has one end 11 having a large diameter and the other end 13 in the axial direction A having a small diameter, and has a cylindrical inner peripheral surface 1a in an axial portion. An end of the inner peripheral surface 1a on one end 11 side is an opening 12, and an end on the other end 13 side is an end wall surface 1b orthogonal to the axial direction A.

One end 11 has a large diameter portion 11a having a coaxially larger diameter than the opening 12 on one end side of the opening 12 in the axial direction A. Further, on one end side of the large diameter portion 11a of one end 11, as shown in Figure 2, a groove 11b having as large a diameter as the large diameter portion 11a, and a clamp portion 11c having a smaller diameter than the groove 11b are alternately formed at regular intervals in a circumferential direction. The groove 11b is formed to have a size that allows each pawl 22a of a below described outer lid 22 to be moved in the axial direction A. With each pawl 22a being rotated by a predetermined angle in the large diameter portion 11a, the clamp portion 11c locks each pawl 22a to prevent the pawl 22a from being dislodged from the large diameter portion 11a in the axial direction A. Further, an outer peripheral surface 11f of one end 11 is formed into a cylindrical shape coaxial with the opening 12.

As shown in Figure 4, the opening 12 includes a first inner peripheral surface 12a that fits against a tip outer peripheral surface 21c of a below described inner lid 21, and a second inner peripheral surface 12b that fits against a base outer peripheral surface 21d of the inner lid 21. The second inner peripheral surface 12b is placed on one end side of the first inner peripheral surface 12a in the axial direction A (on the outside of the container body 1), and has a larger diameter than the first inner peripheral surface 12a. Then, the first inner peripheral surface 12a and the second inner peripheral surface 12b are coaxially and continuously formed via a taper portion. Also, a packing groove 12c that houses a second packing 12d is formed in an end on one end side of the second inner peripheral surface 12b.

Further, a portion around the packing groove 12c opening in one end 11 is an end surface 11d orthogonal to the axial direction A, and a below described second packing holding member 12g is fastened by a bolt to the end surface 11d.

The second packing 12d is formed into a ring shape and has a U-shaped section with an inner wall 12e on the radial inside and an outer wall 12f on the radial outside placed opposite each other, and is housed in the packing groove 12c with an open side of the U shape being directed to the outside of the container body 1 so as to seal the opening 12 and the inner lid 21. The second packing 12d is made of an elastic material (for example, fluororesin) resistant to high temperature. The second packing 12d is placed on one end side of the container body 1 in the axial direction A (closer to the outside of the container body 1) relative to a below described first packing (packing) 21i.

As shown in Figures 3, 4 and 6, the second packing holding member 12g includes a ring portion 12h having a hollow disk shape so as to be fastened by a bolt to the end surface 11d of one end 11, and a lock portion 12i that is bent from an inner peripheral edge of the ring portion 12h in the axial direction A and holds the outer wall 12f of the second packing 12d in tight contact with a bottom surface of the packing groove 12c, formed integrally with each other. The lock portion 12i is continuously formed in a circumferential direction of the ring portion 12h to form a cylindrical shape.

As shown in Figure 3, the lid 2 includes the inner lid 21 that fits in the opening 12, the outer lid 22 that is provided adjacent to the inner lid 21 in the axial direction A and rotatably relative to the inner lid 21, and has the pawl 22a that is rotated by a predetermined angle and locked in the clamp portion 11c of one end 11 to hold the inner lid 21 fitting in the opening 12 of the container body 1, and first and second urging means (urging means) 23 and 24 for applying a force to separate the inner lid 21 and the outer lid 22 in the axial direction A.

The inner lid 21 includes a body 21a, and a rotation axis 21b coaxially provided on one end side of the body 21a in the axial direction A, formed integrally with each other.

As shown in Figure 4, the body 21a includes a cylindrical tip outer peripheral surface 21c, and a cylindrical base outer peripheral surface 21d provided on one end side of the tip outer peripheral surface 21c in the axial direction A and having a larger diameter than the tip outer peripheral surface 21c. Then, the tip outer peripheral surface 21c and the base outer peripheral surface 21d are coaxially and continuously formed via a taper portion. As shown in Figure 3, the rotation axis 21b is formed to coaxially protrude from a base surface 21e on one end side of the container body 1 in the axial direction A.

In the body 21a, as shown in Figure 4, a packing groove 21f that houses the first packing 21i is formed in an end on the other end side of the tip outer peripheral surface 21c in the axial direction A. Further, to a tip surface 21g on the other end side of the inner lid 21 in the axial direction A, a first packing holding member (a packing holding member) 21j is fastened by a bolt together with a guide plate 21h.

The first packing 21i is formed into a ring shape and has a U-shaped section with an inner wall 21k on the radial inside and an outer wall 21m on the radial outside placed opposite each other, and is housed in the packing groove 21f with an open side of the U shape being directed to the other end side of the container body 1 (the inside of the container body 1) in the axial direction A so as to seal the inner lid 21 and the opening 12. The first packing 21i is made of an elastic material (for example, fluororesin) resistant to high temperature.

As shown in Figures 4 and 5, the first packing holding member 21j includes a disk 21n fastened by a bolt to the tip surface 21g of the inner lid 21 together with the guide plate 21h, and a lock portion 21p that is bent from the disk 21n in the axial direction and holds the inner wall 21k of the first packing 21i in tight contact with a bottom surface of the packing groove 21f, formed integrally with each other. A plurality of (twelve in this embodiment) lock portions 21p are provided at regular intervals in a circumferential direction of the disk 21n.

The guide plate 21h is placed closer to the other end side in the axial direction A than the second packing holding member 12g (a tip side of the inner lid 21). The guide plate 21h has, in an outer peripheral surface on the tip side thereof, a chamfer having a diameter that gradually decreases toward the tip to form an arc, and the chamfer allows the inner lid 21 to be smoothly inserted into the opening 12.

As shown in Figure 3, the outer lid 22 includes a body 22b, and a rotation axis 22c coaxially connected to one end side of the body 22b in the axial direction A.

The body 22b is integrally made from stainless steel, and has a cylindrical outer peripheral surface 22d, and pawls 22a protruding at regular intervals in a circumferential direction from an end (a tip) on the other end side of the outer peripheral surface 22d in the axial direction. The axial portion of the body 22b has a through hole 22e into which the rotation axis 21b of the inner lid 21 is inserted, and the through hole 22e has , at both ends thereof in the axial direction A, radial bearings 22f that rotatably support the rotation axis 21b.

The radial bearing 22f placed on one end side in the axial direction A is held in the through hole 22e by a first retainer 22g. Further, a second retainer 22h is fastened by a bolt to an end surface on one end side of the rotation axis 21b in the axial direction A. Then, a thrust bearing 22i that is subjected to a force of a below described coil spring 23c is provided between the first retainer 22g and the second retainer 22h in the rotation axis 21b.

On the tip surface 22j on the other end side of the body 22b in the axial direction A, an adhesion preventing plate 22k that prevents galling of the tip surface 22j and the base surface 21e of the inner lid 21 is provided in a position opposite the base surface 21e. The adhesion preventing plate 22k is made of brass and formed into a hollow disk shape, and is fastened by a screw to the tip surface 22j coaxially with the tip surface 22j.

The rotation axis 22c is formed into a cylindrical shape and rotatably supported by bearing means 25. The bearing means 25 is movably provided on a rail (not shown) placed on an unshown base via third support means 26. The rail guides the lid 2 via the third support means 26 or the like so as to move in the axial direction A, moves the inner lid 21 toward and away from the opening 12 of the container body 1, and thus allows the opening 12 to be opened and closed.

As shown in Figure 1, the rotation axis 22c is rotatably driven by an air cylinder (drive means) 22m within a predetermined angle range. The air cylinder 22m has a base connected to the third support means 26 and a tip connected to the outer peripheral surface of the rotation axis 22c, and telescopes in an axial direction to pivotally move each pawl 22a to a position where the pawl 22a can be inserted into each groove 11b of one end 11, or pivotally move each pawl 22a to a position where each pawl 22a is locked in each clamp portion 11c of one end 11.

As shown in Figure 3, the first urging means 23 includes a first spring holding member 23a, a second spring holding member 23b, and a coil spring (urging means) 23c.

The first spring holding member 23a includes a support portion 23d fastened by a bolt coaxially with the rotation axis 21b to an end surface on one end side of the second retainer 22h in the axial direction A, and a spring guide bar 23e protruding coaxially with the support portion 23d from an end surface on one end side of the support portion 23d, formed integrally with each other.

The second spring holding member 23b includes a plurality of (four in this example) pipes 23f provided to protrude from an end surface on one end side of the first retainer 22g in the axial direction A, a support plate 23g provided to abut against an end surface on one end side of each pipe 23f, and a bolt 23h screwed into a screw hole in the body 22b from one end side of the support plate 23g through the inside of each pipe 23f and through a through hole in the first retainer 22g.

Each bolt 23h is screwed into the screw hole in the body 22b to fasten the first retainer 22g, the pipe 23f, and the support plate 23g to the body 22b. The pipe 23f is fastened by the bolt 23h to hold the support plate 23g in parallel with the end surface on one end side of the support portion 23d with a predetermined distance therebetween.

The support plate 23g has a through hole into which the spring guide bar 23e can be inserted. The coil spring 23c is held under compression by the end surface on one end side of the support portion 23d and the end surface on the other end side of the support plate 23g, with the hollow portion of the coil spring 23c extending in the axial direction being guided by the spring guide bar 23e.

Then, the coil spring 23c under compression is configured so that pressure of the high-temperature and high-pressure fluid of carbon dioxide supplied into the container body 1 causes the inner lid 21 to move to one end side (the outside of the container body 1) in the axial direction A and abut against the adhesion preventing plate 22k, and then, with the pressure in the container body 1 being reduced to normal pressure (atmospheric pressure), the inner lid 21 and the adhesion preventing plate 22k are brought into tight contact with each other by the abutment, and the coil spring produces a larger force than a force for maintaining the tight contact state in a direction of separating the inner lid 21 and the adhesion preventing plate 22k in the axial direction A.

The second urging means 24 is constituted by a fluororesin O ring having an inner diameter that surrounds the outer periphery of the adhesion preventing plate 22k. The second urging means 24 has a section with a diameter larger than a thickness of the adhesion preventing plate 22k, and when the base surface 21e of the inner lid 21 abuts against the adhesion preventing plate 22k, the second urging means 24 is elastically compressed. This causes a force to be produced in a direction of separating the inner lid 21 from the adhesion preventing plate 22k.

The second urging means 24 may be configured to produce a force equal to the force produced from the first urging means 23 by the coil spring 23c. Thus, either the first urging means 23 or the second urging means 24 may be provided.

As shown in Figure 2, the first support means 3 includes a bracket 32 connected to each of the lateral ends of one end 11, a support mount 33 standing on the base, and the first linear guide 31 placed between the support mount 33 and the bracket 32.

The brackets 32 are fastened by bolts on planer seats 11e formed symmetrically on the outer peripheral surface 11f of one end 11. Each seat 11e is formed perpendicularly to a horizontal line orthogonal to the central axis of the opening 12. The bracket 32 is configured so that a lower end surface thereof is oriented in the horizontal direction with the bracket 32 being fastened to the seat 11e.

The support mount 33 is configured so that an upper end surface thereof is oriented in the horizontal direction with the support mount 33 standing on the base.

The first linear guide 31 includes a rail 31a, and a movable portion 31b movably connected to the rail 31a along the length thereof. The rail 31a is fastened by a bolt to the upper end surface of the support mount 33 directly or via an interposing member. The movable portion 31b is fastened by a bolt to the lower end surface of the bracket 32 directly or via an interposing member. Mounting positions of the rail 31a and the movable portion 31b to the support mount 33 and the bracket 32 can be fine adjusted so that the movable portion 31b is freely movable in a direction of displacement of the seat 11e by thermal deformation of the container body 1. In this case, the interposing member is preferably configured as fine adjustment means.

As shown in Figure 1, in the container body 1, the other end 13 is supported by second support means 4 including a second linear guide (a second displacement absorbing member) 41 that absorbs displacement of the other end 13 in the axial direction A. The other end 13 has an outer peripheral surface 13a that is formed coaxially with the opening 12 and supported by the second support means 4.

The second support means 4 includes a bracket 42 connected to the outer peripheral surface 13a of the other end 13, a support mount 43 standing on the base, and the second linear guide 41 placed between the support mount 43 and the bracket 42.

The bracket 42 is configured so that a lower end surface thereof is oriented in the horizontal direction with the bracket 42 being connected to the outer peripheral surface 13a of the other end 13.

The support mount 43 is configured so that an upper end surface thereof is oriented in the horizontal direction with the support mount 43 standing on the base.

The second linear guide 41 includes a rail 41a, and a movable portion 41b movably connected to the rail 41a along the length thereof. The rail 31a is fastened by a bolt to the upper end surface of the support mount 43 directly or via an interposing member. The movable portion 41b is fastened by a bolt to the lower end surface of the bracket 42 directly or via an interposing member. Mounting positions of the rail 41a and the movable portion 41b to the support mount 43 and the bracket 42 can be fine adjusted so that the movable portion 31b is freely movable in a direction of displacement of the other end 13 by thermal deformation of the container body 1. In this case, the interposing member is preferably configured as fine adjustment means.

Further, as shown in Figures 1 and 2, in one end 11 of the container body 1, the center in the lateral direction B at the lower end of one end 11 is guided by lateral constraining means 5. The lateral constraining means 5 includes a guided portion 51 and a guiding portion 52, and prevents the center of the opening 12 from being displaced in the lateral direction B.

The guided portion 51 is fastened by a bolt to the center in the lateral direction B at the lower end of one end 11, and has a pair of walls 51a and 51a protruding downward in parallel with the guided portion 51 being fastened to one end 11, and a groove 51b between the walls 51a and 51a. Specifically, the groove 51b is positioned at the center in the lateral direction B of one end 11 and extends in the axial direction A.

Bolts 51c are screwed into the walls 51a and 51a at two positions spaced in the axial direction A. The bolts 51c are coaxiallyplaced so that tips thereof are directed to the inside of the groove 51b from both sides of the walls 51a and 51a, and are fastened by lock nuts 51d to the walls 51a and 51a with tip surfaces thereof being close to a below described rib 52a.

The guide portion 52 is placed on an upper end of fourth support means 53 placed on the base, and has the planar rib 52a that is inserted into the center in the lateral direction B of the groove 51b and extends in the axial direction A.

In the pressure-resistant container configured as described above, one end 11 of the container body 1 is supported at the lateral ends relative to the axial direction with the axial direction A being oriented in the horizontal direction, and each of the lateral ends is supported by the first support means 3 including the first linear guide 31 that absorbs the displacement of one end 11 in the lateral direction B. Thus, even if, for example, a supercritical fluid of carbon dioxide is introduced into the container body 1 as a high-temperature and high-pressure fluid, or the supercritical fluid is discharged and pressure changes to a normal (atmospheric) pressure state or a lower pressure state, thereby causing a significant change in temperature of the container body 1, thermal deformation of the container body 1 caused by the temperature change may be absorbed by the first linear guide 31 at each of the lateral ends of one end 11.

Thus, the lateral ends of one end 11 of the container body 1 are substantially equally displaced in the lateral direction B by the temperature change. Portions of one end 11 of the container body 1 other than in the lateral direction are also equally displaced in a vertical direction or an obliquely vertical direction.

Therefore, even if the temperature of the container body 1 significantly changes, the amount of displacement of the opening 12 of the container body 1 in the lateral direction B or the vertical direction can be minimized. Thus, the opening 12 of the container body 1 can be smoothly opened and closed with the inner lid 21 of the lid 2 without being affected by the temperature change.

The other end 13 of the container body 1 in the axial direction A is supported by the second support means 4 including the second linear guide 41 that absorbs the displacement of the other end 13 in the axial direction, thereby preventing the opening 12 from being displaced in the axial direction by thermal deformation of the container body 1 in the axial direction A.

One end 11 of the container body 1 is guided by the lateral constraining means 5 for laterally constraining the center in the lateral direction B of one end 11, thereby reliably preventing the opening 12 of the container body 1 from being displaced in the lateral direction B by thermal deformation.

Further, the lid 2 includes the inner lid 21 that fits in the opening 12 of the container body 1, and the outer lid 22 that is provided adjacent to the inner lid 21 in the axial direction A and rotatably relative to the inner lid 21, and has the pawl 22a that is rotated by a predetermined angle and locked in the clamp portion 11c provided in one end 11 of the container body 1 to hold the inner lid 21 fitting in the opening 12 of the container body 1, and thus rotating the outer lid 22 only allows the inner lid 21 to be held fitting in the opening 12. Specifically, rotation of the inner lid 21 relative to the opening 12 can be prevented during the holding.

Pressure in the container body 1 acts on the outer lid 22 via the inner lid 21, and thus the inner lid 21 and the outer lid 22 are pressed to be in tight contact with each other. The tight contact state is still maintained after the pressure in the container body 1 is reduced to, for example, normal pressure, and rotating the outer lid 22 so as to unlock the pawl 22a from the clamp portion 11c of the container body 1 causes rotation of the inner lid 21. However, the first and second urging means 23, 24 are provided for applying the force to separate the inner lid 21 and the outer lid 22 in the tight contact state in the axial direction A, thus reducing the pressure in the container body 1 to, for example, normal pressure allows the inner lid 21 and the outer lid 22 to be separated, and the outer lid 22 only is rotated to unlock the pawl 22a from the clamp portion 11c, thereby allowing the inner lid 21 to be drawn out of the opening 12.

Thus, rotation of the inner lid 21 fitting in the opening 12 can be prevented, thereby reducing wear of the first packing 21i and the second packing 12d placed between the inner lid 21 and the opening 12.

Further, the adhesion preventing plate 22k is provided on the tip surface 22j of the outer lid 22 opposite the base surface 21e of the inner lid 21, thereby preventing an increase in adhesion caused by the galling of the inner lid 21 and the outer lid 22. Thus, the inner lid 21 and the outer lid 22 can be reliably separated by the first and second urging means 23 and 24.

The inner wall 21k of the first packing 21i provided in the inner lid 21 is held in the packing groove 21f of the inner lid 21 by the first packing holding member 21j, thereby preventing deformation of the first packing 21i in a direction away from the inner lid 21 while maintaining sealing performance of the first packing 21i between the inner lid 21 and the opening 12. Specifically, the first packing 21i is made of synthetic resin such as fluororesin having a larger coefficient of linear expansion than stainless steel that forms the inner lid 21, and thus deformation occurs such that the first packing 21i protrudes from the packing groove 21f of the inner lid 21 or hangs from the pacing groove 21f with increase in temperature. Such deformation can be restrained by the first packing holding member 21j. This prevents the inner lid 21 from being unable to fit in the opening 12 of the container body 1 because of the deformation of the first packing 21i by the temperature change.

The open side of the U shape of the first packing 21i is directed to the inside of the container body 1, thereby reliably preventing the high-temperature and high-pressure fluid in the container body 1 from leaking out through a gap between the inner lid 21 and the opening 12.

On the other hand, the second packing 12d is provided in the opening 12, and the outer wall 12f of the second packing 12d is held in the packing groove 12c of the opening 12 by the second packing holding member 12g, thereby preventing deformation of the second packing 12d in a direction away from the opening 12 while maintaining sealing performance of the second packing 12d between the opening 12 and the inner lid 21. Specifically, the second packing 12d is made of resin such as fluororesin having a larger coefficient of linear expansion than stainless steel that forms the container body 1, and thus deformation occurs such that the packing shrinks inward from the packing groove 12c of the opening 12 with reduction in temperature. Such deformation can be restrained by the second packing holding member 12g. This prevents the inner lid 21 from being unable to fit in the opening 12 of the container body 1 because of the deformation of the second packing 12d by the temperature change.

The open side of the U shape of the second packing 12d is directed to the outside of the container body 1, thereby reliably preventing the outside air from flowing into the container body 1 through the gap between the opening 12 and the inner lid 21 even if a vacuum is introduced into the container body 1.

In the embodiment, the example is shown in which the axial direction A of the container body 1 is oriented in the horizontal direction, but it should be understood that the axial direction A may be oriented in lateral directions other than the horizontal direction. Specifically, the axial direction A may be oriented in an obliquely lateral direction tilted relative to the horizontal direction.

The example is shown in which the adhesion preventing plate 22k is provided on the tip surface 22j of the outer lid 22, but the adhesion preventing plate 22k may be provided on the base surface 21e of the inner lid 21.

### Industrial Applicability

According to the pressure-resistant container of the present invention, the opening of the container body can be smoothly opened and closed by means of the lid thereof, without being affected by temperature changes.

## Claims

1. A pressure-resistant container comprising: a pressure-resistant container body (1) that has an opening (12) at one end (11) in an axial direction (A) and can contain a high-temperature and high-pressure fluid; and a lid (2) that is moved toward and away from said opening (12) of the container body (1) to open and close said opening (12),
**characterized in that** said one end (11) of said container body (1) is supported on both sides relative to said axial direction (A) with said axial direction being oriented in a lateral direction (B), and
each side of said one end (11) is supported by support means (3) including a displacement absorbing member (31b) that absorbs displacement in a lateral direction (B), and
said lid (2) includes an inner lid (21) that fits in said opening (12) of said container body (1), an outer lid (22) that is provided adjacent to the inner lid (21) in the axial direction (A) and rotatably relative to said inner lid (21), and is rotated by a predetermined angle and locked in a clamp portion (11c) provided in one end (11) of said container body (1) to hold said inner lid (21) fitting in the opening (12) of said container body (1), and urging means (23, 24) for applying a force to separate said inner lid (21) and said outer lid (22) in the axial direction (A).

2. The pressure-resistant container according to claim 1, **characterized in that** an adhesion preventing plate (22b) that prevents galling of each surface (21e, 22j) is provided on at least one of opposite surfaces (21e, 22j) of said inner lid (21) and said outer lid (22).

3. The pressure-resistant container according to claim 1, **characterized in that** said inner lid (21) is provided with a packing (21i) having a U-shaped section that seals said inner lid (21) and the opening (12) of said container body (1) with an open side of the U shape being directed to the inside of said container body, and provided with a packing holding member (21j) that holds an inner wall/on the radial inside of the U shape of said packing (21i) on the inner lid (24) side.

4. The pressure-resistant container according to claim 1, **characterized in that** one end (11) of said container body (1) is provided, in a position closer to the outside of said container body (1) than said packing (21i) in said opening (12), with second packing (12d) having a U-shaped section that seals said opening (12) and said inner lid (21) with an open side of the U shape being directed to the outside of said container body (1), and provided with a second packing (12d) holding member (12g) that holds an outer wall (12f) on the radial outside of the U shape of said second packing (12d) on the opening (12) side.

5. The pressure-resistant container according to claim 1, **characterized in that** the other end (13) of said container body (1) in said axial direction (A) is supported by second support means (4) including a second displacement absorbing member (41b) that absorbs displacement of the other end (13) in said axial directions (A).

6. The pressure-resistant container according to claim 1, **characterized in that** said one end (11) of said container body (1) is guided by lateral constraining means (5) for laterally constraining the center in the lateral direction (B) of said one end (11).

## Patentansprüche

1. Druckfester Behälter, der Folgendes umfasst:
einen druckfesten Behälterkörper (1) mit einer Öffnung (12) an einem Ende (11) in einer axialen Richtung (A), der ein Hochtemperatur- und Hochdruckfluid aufnehmen kann; und einen Deckel (2), der zu der genannten Öffnung (12) des Behälterkörpers (1) hin und davon weg bewegt wird, um die genannte Öffnung (12) zu öffnen bzw. zu schließen,
**dadurch gekennzeichnet, dass** das genannte eine Ende (11) des genannten Behälterkörpers (1) auf beiden Seiten relativ zu der genannten axialen Richtung (A) gelagert ist, wobei die genannte axiale Richtung in einer lateralen Richtung (B) orientiert ist, und
jede Seite des genannten einen Endes (11) durch Tragmittel (3) mit einem Verschiebungsabsorptionselement (31b) getragen wird, das eine Verschiebung in einer lateralen Richtung (B) absorbiert, und
der genannte Deckel (2) Folgendes beinhaltet: einen Innendeckel (21), der in die genannte Öffnung (12) des genannten Behälterkörpers (1) passt, einen Außendeckel (22), der neben dem Innendeckel (21) in der axialen Richtung (A) vorgesehen und relativ zu dem genannten Innendeckel (21) drehbar ist und um einen vorbestimmten Winkel gedreht und in einem Klemmteil (11c) arretiert wird, der in einem Ende (11) des genannten Behälterkörpers (1) vorgesehen ist, um den in der Öffnung (12) des genannten Behälterkörpers (1) sitzenden genannten Innendeckel (21) zu halten, und Drückmittel (23, 24) zum Aufbringen einer Kraft zum Trennen des genannten Innendeckels (21) und des genannten Außendeckels (22) in der axialen Richtung (A).

2. Druckfester Behälter nach Anspruch 1, **dadurch gekennzeichnet, dass** eine Haftverhinderungsplatte (22h), die ein Festfressen jeder Oberfläche (21e, 22j) verhindert, auf wenigstens einer der gegenüberliegenden Flächen (21e, 22j) des genannten Innendeckels (21) und des genannten Außendeckels (22) vorgesehen ist.

3. Druckfester Behälter nach Anspruch 1, **dadurch gekennzeichnet, dass** der genannte Innendeckel (21) mit einer Dichtung (21i) mit einem U-förmigen Querschnitt, die den genannten Innendeckel (21) und die Öffnung (12) des genannten Behälterkörpers (1) mit einer offenen Seite der U-Form zur Innenseite des genannten Behälterkörpers gerichtet abdichtet, und mit einem Dichtungshalteelement (21j) versehen ist, das eine Innenwand (21b) auf der radialen Innenseite der U-Form der genannten Dichtung (21i) auf der Seite des Innendeckels (21) hält.

4. Druckfester Behälter nach Anspruch 1, **dadurch gekennzeichnet, dass** ein Ende (11) des genannten Behälterkörpers (1) in einer Position, die näher an der Außenseite des genannten Behälterkörpers (1) liegt als die genannte Dichtung (21i) in der genannten Öffnung (12), mit einer zweiten Dichtung (12d) mit einem U-förmigen Querschnitt versehen ist, die die genannte Öffnung (12) und den genannten Innendeckel (21) mit einer offenen Seite der U-Form zur Außenseite des genannten Behälterkörpers (1) gerichtet abdichtet, und mit einem Halteelement (12g) für die zweite Dichtung (12d) versehen ist, das eine Außenwand (12f) auf der radialen Außenseite der U-Form der genannten Dichtung (12d) auf der Seite der Öffnung (12) hält.

5. Druckfester Behälter nach Anspruch 1, **dadurch gekennzeichnet, dass** das andere Ende (13) des genannten Behälterkörpers (1) in der genannten axialen Richtung (A) von dem genannten Tragmittel (4) getragen wird, das ein zweites Verschiebungsabsorptionselement (41b) aufweist, das eine Verschiebung des anderen Endes (13) in der genannten axialen Richtung (A) absorbiert.

6. Druckfester Behälter nach Anspruch 1, **dadurch gekennzeichnet, dass** das genannte eine Ende (11) des genannten Behälterkörpers (1) durch ein laterales Festsetzmittel (5) zum lateralen Festsetzen der Mitte in der lateralen Richtung (B) des genannten einen Endes (11) geführt wird.

## Revendications

1. Récipient résistant à la pression comprenant : un corps de récipient résistant à la pression (1) qui est doté d'une ouverture (12) au niveau d'une extrémité (11) dans une direction axiale (A) et peut contenir un fluide haute température et haute pression ; et un couvercle (2) qui est déplacé vers et à l'opposé de ladite ouverture (12) du corps de récipient (1) pour ouvrir et fermer ladite ouverture (12),
**caractérisé en ce que** ladite une extrémité (11) dudit corps de récipient (1) est soutenue sur les deux côtés par rapport à ladite direction axiale (A) avec ladite direction axiale étant orientée dans une direction latérale (B), et chaque côté de ladite une extrémité (11) est soutenu par un moyen de soutien (13) incluant un élément d'absorption du déplacement (31b) qui absorbe le déplacement dans une direction latérale (B), et
ledit couvercle (2) inclut un couvercle interne (21) qui s'ajuste dans ladite ouverture (12) dudit corps de récipient (1), et un couvercle externe (22) qui est fourni adjacent au couvercle interne (21) dans la direction axiale (A) et de façon pivotante par rapport au dit couvercle interne (21), et est pivoté selon un angle prédéterminé et verrouillé dans une portion de serrage (112) fournie dans une extrémité (11) dudit corps de récipient (1) pour maintenir ledit couvercle interne (21) ajusté dans l'ouverture (12) dudit corps de récipient (1), et un moyen de poussée (23, 24) pour appliquer une force pour séparer ledit couvercle interne (21) et ledit couvercle externe (22) dans la direction axiale (A).

2. Récipient résistant à la pression selon la revendication 1, **caractérisé en ce qu'**une plaque de prévention d'adhérence (22h) qui empêche le grippage de chaque surface (21e, 22j) est fournie sur au moins une des surfaces opposées (21e, 22j) dudit couvercle interne (21) et dudit couvercle externe (22).

3. Récipient résistant à la pression selon la revendication 1, **caractérisé en ce que** ledit couvercle interne (21) est fourni avec une garniture (21i) étant dotée d'une section en forme de U qui ferme hermétiquement ledit couvercle interne (21) et l'ouverture (12) dudit corps de récipient (1) avec un côté ouvert de la forme en U étant dirigé vers l'intérieur dudit corps de récipient, et doté d'un élément de maintien de garniture (21j) qui maintient une paroi interne (21h) sur l'intérieur radial de la forme en U de ladite garniture (21i) du côté du couvercle interne (21).

4. Récipient résistant à la pression selon la revendication 1, **caractérisé en ce qu'**une extrémité (11) dudit corps de récipient (1) est fournie, dans une position plus rapprochée de l'extérieur dudit corps de récipient (1) que ladite garniture (21i) dans ladite ouverture (12), avec une deuxième garniture (12d) étant dotée d'une section en forme de U qui ferme hermétiquement ladite ouverture (12) et ledit couvercle interne (21) avec une côté ouvert de la forme en U étant dirigé vers l'extérieur dudit corps de récipient (1), et doté d'un deuxième élément de maintien (12g) de garniture (12d) qui maintient une paroi externe (12f) sur l'extérieur radial de la forme en U de ladite deuxième garniture (12d) sur le côté d'ouverture (12).

5. Récipient résistant à la pression selon la revendication 1, **caractérisé en ce que** l'autre extrémité (13) dudit corps de récipient (1) dans ladite direction axiale (A) est soutenue par un deuxième moyen de soutien (4) incluant un deuxième élément d'absorption du déplacement (41b) qui absorbe le déplacement de l'autre extrémité (13) dans ladite direction axiale (A).

6. Récipient résistant à la pression selon la revendication 1, **caractérisé en ce que** ladite une extrémité (11) dudit corps de récipient (1) est guidée par un moyen de restriction latérale (5) pour restreindre latéralement le centre dans la direction latérale (B) de ladite une extrémité (11).
